# EUROPÄISCHE PATENTSCHRIFT

(11) **EP 2 064 948 B1**
(45) Veröffentlichungstag und Bekanntmachung des Hinweises auf die Patenterteilung: **01.02.2012**
(21) Anmeldenummer: 08169359.0
(22) Anmeldetag: 18.11.2008
(51) Int. Cl.: A01M 7/00, A01C 23/00

(54) **Spritzengestänge**
Sprayer boom
Rampe de pulvérisation

(30) Priorität: 28.11.2007 DE 102007047886
(43) Veröffentlichungstag der Anmeldung: 03.06.2009
(73) Patentinhaber: John Deere Fabriek Horst B.V., 5961 PT Horst (NL)
(72) Erfinder: Theeuwen, Hans Andre, 5981 XT, Panningen (NL); Fransen, Petrus Johannes Maria, 6031 PH, Nederweert (NL); Klemme, Kent A, Ankeny, IA 50021 (US)
(74) Vertreter: Holst, Sönke

(56) Entgegenhaltungen:
- EP-A1- 0 494 125

## Beschreibung

Die Erfindung betrifft ein Spritzengestänge für eine Feldspritze, mit einem Träger und einem am Träger schwenkbar befestigten Mittelrahmen, wobei der Mittelrahmen gegenüber dem Träger um eine im wesentlichen vertikal ausgerichtete Pendelachse aus einer Neutralstellung heraus beidseitig verschwenkbar ist und wenigstens ein erster Hydraulikzylinder angeordnet ist, der einenends gelenkig am Träger und anderenends gelenkig am Mittelrahmen befestigt ist, derart, dass beim Verschwenken des Mittelrahmens gegenüber dem Träger aus der Neutralstellung heraus der wenigstens erste Hydraulikzylinder ausgefahren oder eingefahren wird.

In der Landwirtschaft werden Spritzgeräte, insbesondere landwirtschaftliche Feldspritzen eingesetzt. Diese Feldspritzen können als selbst fahrende Spritzmaschinen oder auch als an einen Schlepper oder ein Zugfahrzeug angehängte oder angebaute Spritzmaschinen ausgebildet sein. Die Feldspritzen verfügen über ein Spritzengestänge (auch Verteilgestänge genannt), mit dem Düngemittel, Pflanzenschutzmittel bzw. Schädlingsbekämpfungsmittel und dergleichen auf einem zu bearbeitenden Feld ausgetragen bzw. verteilt werden.

Derartige Spritzengestänge sind neben ihrem Eigengewicht auch anderen Belastungen ausgesetzt, wie z. B. Fliehkräften bei Kurvenfahrt, die sich sowohl auf das Fahrzeug als auch auf das Gestänge selbst dynamisch auswirken. Um diesen Belastungen entgegenzuwirken bzw. um diese zu kompensieren, ist es bekannt, den Mittelrahmen eines Spritzengestänges pendelnd gegenüber dem Träger des Mittelrahmens um eine vertikal ausgerichtete Pendelachse aufzuhängen und die Pendelbewegungen über Feder-Dämpfer Systeme, die zwischen Träger und Mittelrahmen angeordnet sind, abzufangen bzw. zu kompensieren. Die Ausführungen mit Feder-Dämpfer Systeme sind aufwändig, kostenintensiv und hinsichtlich ihrer Federungs- und Dämpfungscharakteristiken nur eingeschränkt variierbar. Eine solche Konstruktion ist z.B. aus EP04944125 A1 bekannt.

Ferner offenbart die EP 1 716 754 A2 eine landwirtschaftliche Feldspritze mit einem um eine vertikale Achse pendelnd aufgehängten Spritzengestänge, wobei das Spritzengestänge mit einem motorischen Stellglied ausgerüstet ist, um das Spritzengestänge in Abhängigkeit eines Sensorsignals rechtwinklig zu einer Sollrichtung der Fahrspur auszurichten. Hierbei wird vorgeschlagen, ein Hydraulikzylinder als motorisches Stellglied einzusetzen. Ein derartiges Spritzengestänge ist jedoch nicht darauf ausgelegt, dynamischen Belastungen entgegenzuwirken, bzw. die durch Fliehkräfte verursachten auftretenden Wirkungen auf das Spritzengestänge abzuschwächen bzw. wenigstens teilweise zu kompensieren (zu dämpfen und abzufedern).

Die der Erfindung zugrunde liegende Aufgabe wird darin gesehen, ein Spritzengestänge der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein Spritzengestänge der eingangs genannten Art derart ausgebildet, dass der wenigstens erste Hydraulikzylinder über eine erste und eine zweite Hydraulikkammer verfügt, eine erste Hydraulikleitung vorgesehen ist, die in die erste Hydraulikkammer des wenigstens ersten Hydraulikzylinders mündet, und eine zweite Hydraulikleitung vorgesehen ist, die in die zweite Hydraulikkammer des wenigstens ersten Hydraulikzylinders mündet, wobei Mittel vorgesehen sind, durch die ein Hydraulikfluss aus einer Hydraulikkammer heraus gedrosselt und ein Hydraulikfluss in eine Hydraulikkammer hinein im Wesentlichen ungedrosselt erfolgt und wobei die Hydraulikleitungen derart angeordnet sind, dass bei dem wenigsten ersten Hydraulikzylinder ein Hydraulikfluss aus der einen Hydraulikkammer heraus mit einem Hydraulikfluss in die andere Hydraulikkammer hinein verbunden ist. Der wenigstens erste Hydraulikzylinder ist auf einer Seite der vertikal ausgerichteten Pendelachse angeordnet und am Mittelrahmen und am Träger gelenkig befestigt. Dadurch wird eine mechanische Kopplung geschaffen, so dass bei Schwenk- bzw. Pendelbewegungen des Spritzengestänges um die vertikal ausgerichtete Pendelachse der wenigstens eine Hydraulikzylinder eingefahren oder ausgefahren wird. Die vorgesehenen Mittel zum Drosseln der aus einer sich verkleinernden Kammer heraus fließenden Hydraulikflüssigkeit bewirken, dass eine Bewegungsdämpfung bzw. ein Bewegungswiderstand erzeugt wird, wobei zur Wiederherstellung eines hydraulischen Gleichgewichts die sich vergrößernde Kammer ungedrosselt mit Hydraulikflüssigkeit füllt. Somit wird ein System geschaffen, dass ohne die Verwendung von konventionellen Feder-Dämpfer Systemen auskommt, sondern durch konstruktiv einfache Anordnung von wenigstens einem Hydraulikzylinder in Verbindung mit Mitteln zur Hydraulikflussdrosselung eine Dämpfung und Kompensation von Pendelbewegungen des Spritzengestänges erzielbar ist. Wie eingangs erwähnt ist das Spritzengestänge für eine Feldspritze geeignet, wobei sich das Spritzengestänge in einer Betriebsstellung im Wesentlichen quer zu einer Fahrtrichtung eines Fahrzeugs (Schlepper oder Trägerfahrzeug) erstreckt, wobei die Fahrtrichtung der Ausbringrichtung von Spritzgut auf einem zu bearbeitendem Feld entspricht. Abweichungen des Spritzengestänges zur genannten Querrichtung treten auf, wenn beispielsweise Beschleunigungskräfte auf das Spritzengestänge einwirken. In einer normalen Betriebsstellung erstreckt sich das Spritzengestänge im Wesentlichen horizontal über die Oberfläche des Feldes, wobei Abweichungen durch Pendelbewegungen, beispielsweise unter Einwirkung von Fliehkräften in Kurvenfahrt, eintreten können.

Vorzugsweise ist wenigstens ein zweiter Hydraulikzylinder angeordnet ist, wobei der erste und zweite Hydraulikzylinder beidseitig der vertikal ausgerichteten Pendelachse angeordnet sind, so dass auf jeder Seite der Pendelachse also ein Hydraulikzylinder angeordnet ist. Beim Verschwenken des Mittelrahmens gegenüber dem Träger aus der Neutralstellung heraus wird der erste Hydraulikzylinder ausgefahren oder eingefahren und der zweite Hydraulikzylinder synchron eingefahren bzw. ausgefahren, wobei die erste Hydraulikleitung die erste Hydraulikkammer des ersten Hydraulikzylinders mit der zweiten Hydraulikkammer des zweiten Hydraulikzylinders verbindet, und die zweite Hydraulikleitung, die zweite Hydraulikkammer des ersten Hydraulikzylinders mit der ersten Hydraulikkammer des zweiten Hydraulikzylinders verbindet. Die Hydraulikzylinder sind beide jeweils am Mittelrahmen und am Träger gelenkig befestigt. Dadurch wird eine mechanische Kopplung geschaffen, so dass bei Schwenk- bzw. Pendelbewegungen des Spritzengestänges um die vertikal ausgerichtete Pendelachse einer der Hydraulikzylinder eingefahren und der andere Hydraulikzylinder synchron ausgefahren wird. Damit ist automatisch ein Ausströmen von Hydraulikflüssigkeit aus der einen Kammer des ersten Hydraulikzylinders mit einem Ausströmen von Hydraulikflüssigkeit aus der entgegen gesetzten Kammer des zweiten Hydraulikzylinders verbunden. Gleichzeitig erfolgt ein Einströmen von Hydraulikflüssigkeit in die jeweils anderen Kammern eines jeden Hydraulikzylinders. Die vorgesehenen Mittel zum Drosselung der aus den sich verkleinernden Kammern heraus fließenden Hydraulikflüssigkeit bewirken, wie oben bereits beschrieben, dass eine Bewegungsdämpfung bzw. ein Bewegungswiderstand erzeugt wird, wobei zur Wiederherstellung eines hydraulischen Gleichgewichts die sich vergrößernden Kammern ungedrosselt mit Hydraulikflüssigkeit aufgefüllt werden.

Vorzugsweise umfassen die Mittel ein in Richtung der Hydraulikkammer öffnendes Drosselrückschlagventil. Dadurch wird ermöglicht, dass eine Drosselung eines Hydraulikflusses aus einer Kammer heraus erfolgt, wobei ein Hydraulikfluss in eine Kammer hinein ungedrosselt erfolgen kann. Vorzugsweise sind die erste und zweite Hydraulikleitung an jeweils ihren Anschlussseiten zu den Kammern mit derartigen Drosselrückschlagventilen versehen. Die Drosselrückschlagventile können dabei als Hydraulikbaustein ausgebildet sein. Es ist jedoch auch möglich, eine gleich wirkende Ausbildung dadurch zu erreichen, dass eine hydraulische Drossel oder Blende mit einer mit einem Rückschlagventil versehenen Bypassleitung kombiniert wird, wobei das Rückschlagventil zur entsprechenden Kammer hin öffnend angeordnet ist. Ferner ist es möglich, das Drosselrückschlagventil bzw. die Drossel in ihrem Querschnitt variierbar bzw. regelbar auszubilden, so dass variable Drosselraten einstellbar sind.

In einer bevorzugten Ausgestaltung der Erfindung ist ein Hydraulikreservoir vorgesehen und beide Hydraulikleitungen mit dem Hydraulikreservoir verbunden bzw. miteinander verbunden und gemeinsam an dem Hydraulikreservoir angeschlossen. Dadurch wird ermöglicht, dass bei unterschiedlich ausgebildeten Kammern während eines Hydraulikflusses aus einer Kammer heraus bzw. in eine Kammer hinein überflüssige Hydraulikflüssigkeit an das Hydraulikreservoir abgegeben bzw. fehlende Hydraulikflüssigkeit aus dem Hydraulikreservoir geschöpft werden kann.

In einer weiteren bevorzugten Ausgestaltung der Erfindung ist ein Schaltventil vorgesehen, welches die erste und/oder zweite Hydraulikleitung mit dem Hydraulikreservoir verbindet, wobei das Schaltventil vorzugsweise als 4/3 Wegeventil mit Schwimm-Mittelstellung ausgebildet ist und wobei das Schaltventil vorzugsweise in Abhängigkeit von einer Schwenkstellung des Mittelrahmens gegenüber dem Träger schaltbar ist. Selbstverständlich kann an Stelle eines 4/3 Schaltventils auch ein anderes gleich wirkendes Schaltventil oder eine entsprechende Schaltventilkombination angeordnet sein. Das Schaltventil verbindet in einer ersten Stellung die beiden Hydraulikleitungen miteinander und mit dem Hydraulikreservoir. In den beiden übrigen Stellungen ist jeweils eine Hydraulikleitung mit dem Hydraulikreservoir und die entsprechend andere Hydraulikleitung beispielsweise mit einer Hydraulikquelle in Form einer Hydraulikpumpe oder eines Hydraulikspeichers verbindbar.

Vorzugsweise ist ein Hydraulikspeicher vorgesehen ist, der über das Schaltventil mit der ersten oder der zweiten Hydraulikleitung verbindbar ist. Der Hydraulikspeicher ist vorzugsweise auf einen voreinstellbaren Hydraulikdruck aufgeladen und kann im Falle einer Zuschaltung unter anderem als hydraulische Feder fungieren.

Vorzugsweise ist in einer weiteren bevorzugten Ausgestaltung der Erfindung ein Sensor vorgesehen, der wenigstens eine Schwenkstellung des Mittelrahmens gegenüber dem Träger bzw. relativ zum Träger signalisiert. So kann beispielsweise bei Erreichen eines vorgebbaren Schwenkwinkels bzw. Pendelwinkels ein Signal generiert werden, aufgrund dessen eine Maßnahme zur Änderung des hydraulischen Drucks oder der Drosselrate eingeleitet werden kann. So kann in Abhängigkeit des Sensorsignals die Schaltung eines mit den Hydraulikleitungen verbundenen Schaltventils vorgenommen bzw. gesteuert werden. Der Sensor kann beispielsweise als Schalter oder Drehwinkelsensor ausgebildet sein, wobei der Schalter bzw. Drehwinkelsensor bei Erreichen eines oder mehrerer vorgebbaren Schwenkwinkel des Mittelrahmens gegenüber dem Träger ein Sensorsignal auslöst. Ferner kann der Sensor als elektromagnetischer Sensor ausgebildet sein, der bei Erreichen einer oder mehrerer vorgebbaren Stellungen des Mittelrahmens ein Sensorsignal auslöst. Das Sensorsignal kann beispielsweise direkt an ein Schaltventil geleitet werden oder es kann beispielsweise auch eine elektronische Steuereinheit vorgesehen sein, die in Abhängigkeit des Sensorsignals ein entsprechendes Steuersignal für ein Schaltventil generiert. In Verbindung mit dem Sensor bzw. mit einem durch den Sensor generierten Sensorsignal oder Steuersignal kann auch das Hinzuschalten oder auch das Abtrennen des Hydraulikspeichers erfolgen. So kann beispielsweise erzielt werden, dass bei Überschreiten oder auch Unterschreiten eines voreinstellbaren Schwenkwinkels bzw. Pendelwinkels das Schaltventil derart geschaltet wird, dass eine Verbindung zum Hydraulikspeicher hergestellt oder unterbrochen wird.

Vorzugsweise ist ein Druckregelventil vorgesehen, welches zwischen dem Hydraulikspeicher und dem Schaltventil angeordnet ist. Vorzugsweise öffnet das Druckregelventil in Richtung der Hydraulikzylinder und schließt, wenn sich ein überhöhter Systemdruck, d.h. ein Systemdruck, der über einen am Druckregelventil voreingestellten Grenzdruck hinausgeht, einstellt. Das Druckregelventil ermöglicht es, die durch den Hydraulikspeicher bereitgestellte Hydraulikflüssigkeit mit einem voreinstellbaren Druckwert in das System einzuspeisen, so dass sich ein gleichmäßiger Druck in Bezug auf die von dem Hydraulikspeicher zu den Hydraulikzylindern fließende Hydraulikflüssigkeit einstellt. So kann beispielsweise erzielt werden, dass, nachdem sich der Mittelrahmen aus einer neutralen Mittelstellung heraus bewegt hat, dieser mit einer konstanten zusätzlichen Rückstellkraft in die neutrale Mittelstellung zurück gebracht wird.

Vorzugsweise ist ein erstes Druckbegrenzungsventil oder Folgeventil vorgesehen, welches zwischen dem Hydraulikspeicher und dem Schaltventil angeordnet ist, wobei das Druckbegrenzungsventil bzw. Folgeventil parallel zu dem Druckregelventil angeordnet ist. Das Druckbegrenzungsventil ermöglicht, dass beispielsweise bei relativ hohen Systemdrücken, beispielsweise, wenn der Mittelrahmen durch einen Stoß mit hoher Schwenkgeschwindigkeit aus einer Neutralstellung heraus bewegt wird, Hydraulikflüssigkeit in den Hydraulikspeicher geleitet werden kann. Dies kann erfolgen, wenn ein am Druckbegrenzungsventil voreingestellter Grenzdruck überschritten wird, so dass das Druckbegrenzungsventil in Richtung des Hydraulikspeichers öffnet. Vorzugsweise liegt der am Druckbegrenzungsventil eingestellte Grenzdruck über dem am Druckregelventil eingestellten Grenzdruck, so dass bei absinkendem Systemdruck, das Druckregelventil erst öffnet, nachdem das Druckbegrenzungsventil geschlossen wurde.

Es kann ein weiteres Druckbegrenzungsventil oder Folgeventil vorgesehen sein, um das Spritzengestänge bzw. das gesamte hydraulische System hydraulisch abzusichern. Bei Überschreitung eines Maximaldrucks, würde das Druckbegrenzungsventil in Richtung eines Hydraulikreservoirs öffnen. Vorzugsweise ist das Druckbegrenzungsventil zwischen dem Hydraulikspeicher und dem Hydraulikreservoir angeordnet.

In einer bevorzugten Ausgestaltung der Erfindung ist beidseitig der vertikal ausgerichteten Pendelachse jeweils ein elastischer Anschlag angeordnet, vorzugsweise in Form eines elastomeren Körpers oder Puffers bzw. Gummipuffers. Der Puffer ist derart angeordnet, dass beim Verschwenken des Mittelrahmens gegenüber den Träger, dieser Puffer wie ein Anschlag wirkt, wobei beim Anschlagen des Mittelrahmens der elastomere Körper oder Puffer komprimiert wird und eine die Schwenkenergie kompensierende bzw. der Schwenkbewegung des Mittelrahmens entgegen wirkende Kraft aufgebaut wird, welche vorzugsweise höher ausfällt, je mehr der Körper bzw. Puffer komprimiert wird. Diese Kraft wird dann als Rückstellkraft freigesetzt, indem sich der Körper bzw. Puffer entsprechend dekomprimiert. Anstelle der elastomeren Körper oder Puffer können auch elastische Federelemente eingesetzt werden, die beim Anschlagen des Mittelrahmens komprimiert werden und eine Federrückstellkraft erzeugen. Auch andere Körper in Form von elastischen Anschlägen können hierzu eingesetzt werden.

Vorzugsweise ist ein Pendelrahmen vorgesehen, an dem der Träger befestigt ist, wobei der Träger um eine horizontal in Fahrtrichtung ausgerichtete untere Pendelachse verschwenkbar an dem Pendelrahmen aufgehängt ist. Der Pendelrahmen dient dazu, das Spritzengestänge um eine horizontal ausgerichtet Achse verschwenkbar aufzuhängen, damit Pendelbewegungen, die von dem Spritzengestänge in vertikaler Richtung ausgeführt werden, entgegengewirkt werden kann. Derartige Bewegungen entstehen insbesondere wenn das Spritzenfahrzeug auf unebenem Terrain bewegt wird, wobei sich vertikale Schwenk- bzw. Pendelbewegungen des Spritzengestänges negativ auf das Spritzergebnis auswirken.

Um das Schwenkverhalten des Spritzengestänges weiter zu verbessern kann auch der Pendelrahmen schwenkbar aufgehängt sein, vorzugsweise an einem Anbaurahmen am Fahrzeug, wobei der Pendelrahmen um eine obere horizontal in Fahrtrichtung ausgerichtete Pendelachse verschwenkbar an dem Anbaurahmen aufgehängt ist. Dadurch werden zwei Pendelachsen geschaffen, auf die man unabhängig voneinander reagieren kann. So können vertikalen Pendelbewegungen des Spritzengestänges um die weitere Pendelachse entgegengewirkt werden, indem das Spritzengestänge entsprechend entgegengesetzt um die eine Pendelachse verschwenkt wird, oder umgekehrt.

In einer bevorzugten Ausgestaltung der Erfindung ist der Anbaurahmen mit einer Feldspritze verbunden. Dabei kann es sich um ein von einem Zugfahrzeug (Schlepper) gezogenes oder um ein an einem Anbaufahrzeug (Schlepper) angebautes oder angehängtes Spritzgerät handeln. Die Feldspritze bzw. das Spritzgerät kann hierbei auch als Selbstfahrer bzw. selbst fahrende Spritze ausgebildet sein, an die ein entsprechender mit einem Spritzengestänge bestückter Anbaurahmen montiert ist.

Der Anbaurahmen ist vorzugsweise über ein Parallelogrammgestänge höhenverstellbar mit einer Feldspritze verbunden. Die Höhenverstellung des Spritzengestänges ist hilfreich, zum einen, um bei unebenem Terrain eine konstante Ausbringhöhe des Spritzgutes erzielen zu können, zum anderen, um die Spritzhöhe auf unterschiedliche Pflanzenbestandshöhen optimal einstellen zu können. Dazu ist das Parallelogrammgestänge vorzugsweise entsprechend sensorgesteuert ausgebildet.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische perspektivische Ansicht eines Teilbereichs eines erfindungsgemäßen Spritzengestänges von hinten,
- Fig. 2: eine schematische perspektivische Ansicht des Teilbereichs des Spritzengestänges aus Figur 1 von vorn,
- Fig. 3: eine schematische Teilquerschnittsansicht des Teilbereichs des erfindungsgemäßen Spritzengestänges entlang der Linie A-A aus Figur 1,
- Fig. 4: einen schematischen Schaltplan einer ersten Ausführungsform für eine hydraulische Anordnung zur Dämpfung eines erfindungsgemäßen Spritzengestänges und
- Fig. 5: einen schematischen Schaltplan einer zweiten Ausführungsform für eine hydraulische Anordnung zur Dämpfung eines erfindungsgemäßen Spritzengestänges.

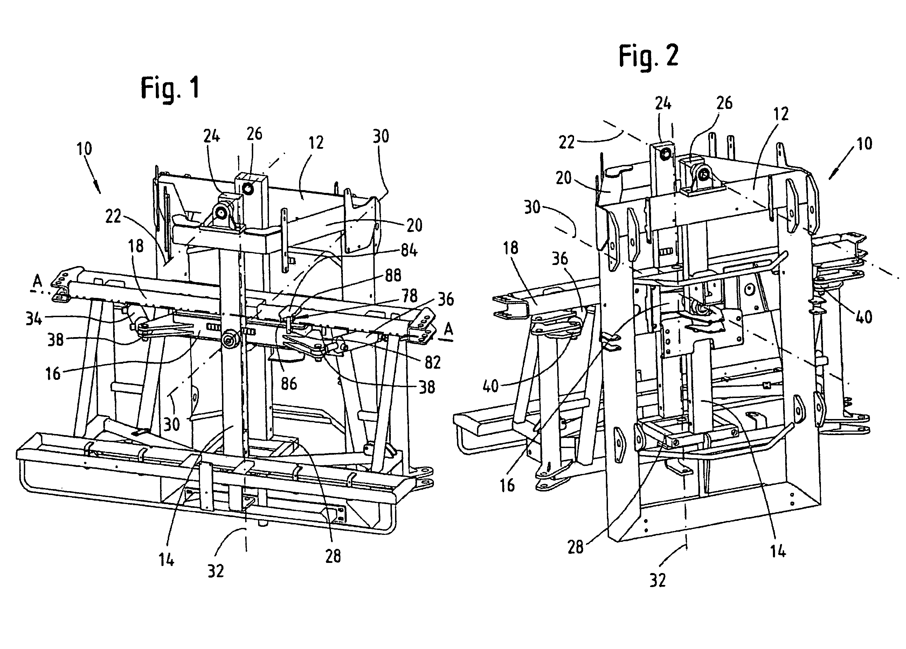

In den Figuren 1 bis 3 ist ein Teilbereich eines Spritzengestänges 10 für eine Feldspritze (nicht dargestellt) gezeigt. Das Spritzengestänge 10 umfasst unter anderem einen Anbaurahmen 12, einen Pendelrahmen 14, einen Träger 16 und einen Mittelrahmen 18.

Der Anbaurahmen 12 ist an einen Rahmen oder einem Chassis (nicht gezeigt) der Feldspritze montierbar, wobei die Feldspritze sowohl als Anbaufeldspritze (als Anbaugerät an die Dreipunktanhängvorrichtung eines Schleppers montiert), als Anhängefeldspritze (als gezogenes Anhängegerät an die Anhängekupplung eines Schleppers angehängt) oder auch als selbst fahrende Feldspritze (auf einem selbst fahrenden Trägerfahrzeug fest montierte Spritzengerät) ausgebildet sein kann. Der Anbaurahmen 12 dient vorzugsweise als Trägerrahmen für das gesamte Spritzengestänge. An der Oberseite des Anbaurahmens 12 ist eine Aufhängung 20 ausgebildet, an der sich eine obere Pendelachse 22 erstreckt, die im Wesentlichen horizontal in Fahrtrichtung ausgerichtet ist.

Der Pendelrahmen 14 umfasst zwei vertikal ausgerichtete Träger 24, 26, die jeweils an ihrem oberen Ende an der oberen Pendelachse 22 schwenkbar bzw. pendelnd gelagert sind. An der Unterseite der Träger ist ein Verstärkungsrahmen 28 ausgebildet, der die beiden Träger 24, 26 starr miteinander verbindet. An dem Pendelrahmen 14 ist an den Trägern 24, 26, in einem mittleren Bereich der Träger 24, 26, eine untere Pendelachse 30 ausgebildet, die im Wesentlichen horizontal in Fahrtrichtung ausgerichtet und im Wesentlichen mittig zum Fahrzeug (nicht gezeigt) bzw. entlang einer Mittenlängsachse der Feldspritze angeordnet ist.

Der Träger 16 ist auf der unteren Pendelachse 30 schwenkbar gelagert, wobei der Träger 16 im Wesentlichen quer zur Fahrrichtung und horizontal ausgerichtet angeordnet ist und die untere Pendelachse 30 mittig zum Träger verläuft. An dem Träger 16 ist eine weitere Pendelachse 32 ausgebildet, die sich im Wesentlichen vertikal erstreckt und mittig zum Träger 16 angeordnet ist. Damit sind alle Pendelachsen 22, 30, 32 mittig zum Fahrzeug angeordnet.

Der Mittelrahmen 18 ist schwenkbar um die vertikale Pendelachse 32 an dem Träger 16 befestigt. Er erstreckt sich, wie auch der Träger 16, im Wesentlichen quer zur Fahrrichtung und ist horizontal ausgerichtet. Der Mittelrahmen 18 stellt den mittleren Teil eines hier nicht vollständig gezeigten Gestängerahmens des Spritzengestänges dar, wobei der vollständige Gestängerahmen, neben dem hier dargestellten Mittelrahmen 18, einen oder mehrere linke und rechte, sich in Betriebsstellung quer zum Fahrzeug erstreckende, Seitenrahmen (nicht gezeigt) aufweist. Die Seitenrahmen werden dabei üblicherweise horizontal oder vertikal verschwenkbar an dem Mittelrahmen 18 befestigt, wobei die Seitenrahmen zum Fahrzeug hin eingefahren (eingeklappt) werden können und in der Regel nur im Spritzbetrieb vollständig oder teilweise sich quer zur Fahrtrichtung erstreckend angeordnet sind.

Gemäß den obigen Ausführungen ist der Mittelrahmen 18 also über den Träger 16 um eine vertikal ausgerichtete Pendelachse 32 in horizontaler Richtung verschwenkbar und über den Träger 16 und den Pendelrahmen 14 um zwei horizontal ausgerichtete Pendelachsen 22, 30 in vertikaler Richtung verschwenkbar aufgehängt. Eine derartige doppelte Aufhängung um die beiden horizontal ausgerichteten Pendelachsen 22, 30 bewirkt, dass vertikale Pendelbewegungen des Spritzengestänges 10 bzw. des Mittelrahmens 18, die beispielsweise durch Unebenheiten des Terrains verursacht werden, optimal kompensiert bzw. reduziert werden können, wobei sich eine resultierende Pendelbewegung des Spritzengestänges in vertikaler Richtung durch eine Pendelbewegung des Pendelrahmens 14 um die obere Pendelachse 20 und durch eine Pendelbewegung des Trägers 16 um die untere Pendelachse 30 zusammensetzt. Der Pendelrahmen 14 und der Mittelrahmen 18 bzw. der Träger 16 werden dabei derart gelenkt bzw. angesteuert, dass eine Pendelbewegung um die untere Pendelachse 30 einer Pendelbewegung um die obere Pendelachse 22 entgegen gerichtet wird, so dass eine resultierende Pendelbewegung des Spritzengestänges 10 deutlich geringer ausfällt als eine Pendelbewegung um die obere Pendelachse 22. Zur Steuerung bzw. Einschränkung bzw. Lenkung von Schwenkbewegungen bzw. Pendelbewegungen um die horizontal ausgerichteten Pendelachsen 22, 30 können hydraulische Dämpfer oder Zylinder oder auch mechanische Federn vorgesehen sein, die hier jedoch nicht weiter beschrieben werden.

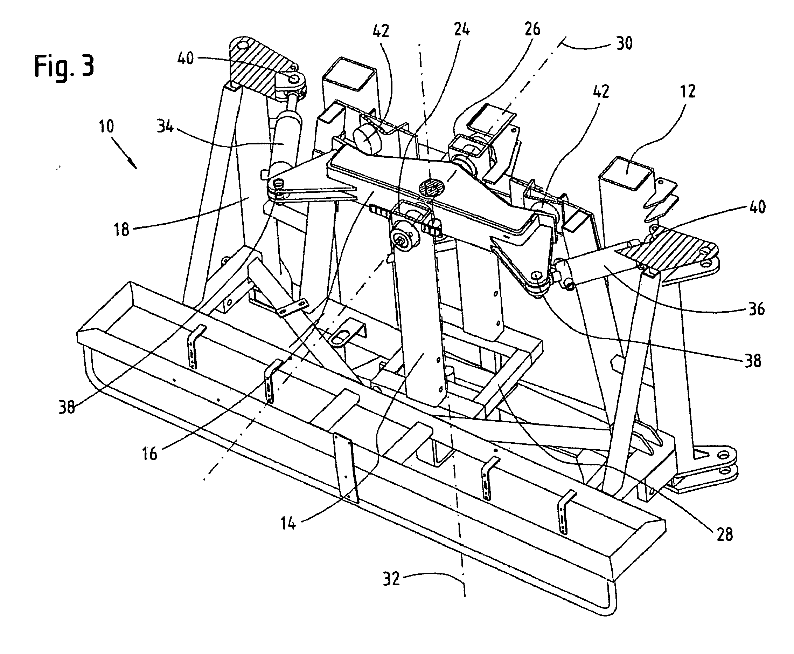

Der Mittelrahmen 18 ist über zwei Hydraulikzylinder 34, 36 mit dem Träger 16 gelenkig verbunden, wobei die Hydraulikzylinder 34, 36 im dargestellten Ausführungsbeispiel in den Figuren 1 bis 3 mit entsprechenden Schwenklagerverbindungen 38, 40 kolbenbodenseitig mit dem Träger 16 und kolbenstangenseitig mit dem Mittelrahmen 18 verbunden sind (am besten zu sehen in Figur 3). Die beiden Hydraulikzylinder 34, 36 sind vorzugsweise rechts und links der vertikalen Pendelachse 32 symmetrisch zur selbigen angeordnet, so dass eine Pendelbewegung des Mittelrahmens 18 gegenüber dem Träger 16 auf der einen Seite der Pendelachse 32 ein Einfahren des einen Hydraulikzylinders 34, 36 und auf der entsprechend anderen Seite der Pendelachse 32 unmittelbar ein Ausfahren des anderen Hydraulikzylinders 34, 36 hervorruft. Um die Pendelbewegung zu begrenzen bzw. abzufangen oder zu stoppen sind an dem Mittelrahmen 18, rechts und links der Pendelachse 32, auf Höhe des Trägers 16, elastische Anschläge 42 in Form von Gummipuffern angeordnet (siehe Figur 3). Die elastischen Anschläge 42 fangen eine Pendelbewegung elastisch ab, d.h. sie wirken zum einen als Anschlag und zum anderen nehmen sie Bewegungsenergie auf, indem sie durch das Anschlagen des Mittelrahmens 18 an den Träger 16 komprimiert werden. Der durch Kompression des elastischen Materials der Anschläge 42 aufgenommene Teil der Energie wird durch Dekompression des elastischen Materials der Anschläge 42 wieder an den Mittelrahmen 18 in Form von Bewegungsenergie abgegeben, welcher dann in entgegen gesetzte Richtung zurück schwenkt.

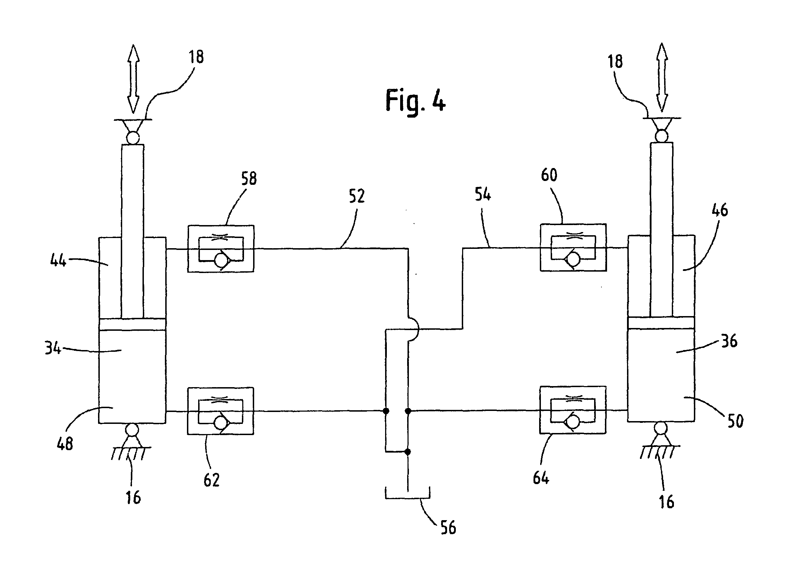

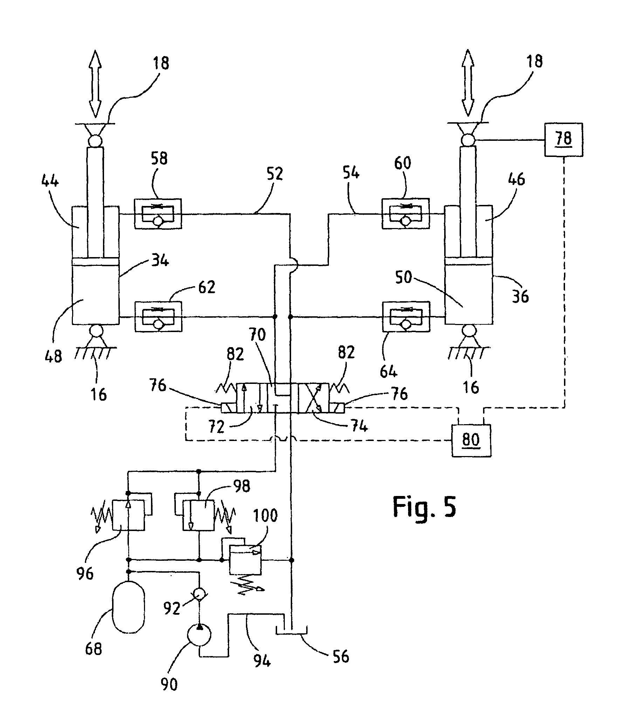

Die Hydraulikzylinder 34, 36 sind doppeltwirkend ausgebildet und weisen jeweils eine erste Hydraulikkammer 44, 46 (in den Figuren 4 und 5 jeweils die kolbenstangenseitigen Kammern) und eine zweite Hydraulikkammer 48, 50 auf (in den Figuren 4 und 5 jeweils die kolbenbodenseitigen Kammern). Eine hydraulische Anordnung in einer ersten erfindungsgemäßen Ausführungsform ist in Figur 4 dargestellt. Es ist schematisch angedeutet, wie die Hydraulikzylinder 34, 36 gegenüber dem Mittelrahmen 18 und Träger 16 angeordnet sind. Es ist eine neutrale Mittenstellung abgebildet, d. h. es liegt keine Pendelbewegung vor und der Mittelrahmen 18 ist parallel zum Träger 16 ausgerichtet, wobei die Hydraulikzylinder 34, 36 jeweils eine gleiche Kolbenstellung aufweisen. Die Hydraulikzylinder 34, 36 sind in einer Kreuzschaltung über eine erste und zweite Hydraulikleitung 52, 54 hydraulisch miteinander verbunden, wobei die erste Hydraulikleitung 52 die erste Hydraulikkammer 44 des einen (in Figur 4 und 5 linken) Hydraulikzylinders 34 mit der zweiten Hydraulikkammer 50 des anderen (in Figur 4 und 5 rechten) Hydraulikzylinders 36 verbindet. Die zweite Hydraulikleitung 54 verbindet entsprechend die erste Hydraulikkammer 46 des anderen (in Figur 4 und 5 rechten) Hydraulikzylinders 36 mit der zweiten Hydraulikkammer 48 des einen (in Figur 4 und 5 linken) Hydraulikzylinders 34. Ferner ist ein Hydraulikreservoir 56 vorgesehen mit welchem die beiden Hydraulikleitungen 52, 54 verbunden sind. Einer jeden Hydraulikkammer 44, 46, 48, 50 ist ein Drosselrückschlagventil 58, 60, 62, 64 zugeordnet, wobei das jeweilige Drosselrückschlagventil 58, 60, 62, 64 in der entsprechenden Hydraulikleitung 52, 54 zwischen Hydraulikreservoir 56 und der entsprechenden Hydraulikkammer 44, 46, 48, 50 positioniert ist. Die hier verwendeten Drosselrückschlagventile 58, 60, 62, 64 stellen eine Kombination aus einer Drossel bzw. einem Drosselventil und einer mit einem Rückschlagventil versehenen Bypassleitung dar, wobei die Drossel bzw. das Drosselventil einstellbar bzw. variierbar ausgebildet sein kann (nicht dargestellt), d. h. der Querschnitt der Drossel bzw. des Drosselventils variierbar ausgebildet sein kann. Dabei kann es sinnvoll sein, die Drossel bzw. das Drosselventil derart zu gestalten, dass eine Verstellung des Querschnitts der Drossel bzw. des Drosselventils über eine elektronische oder manuelle Einrichtung erfolgt. Das Drosselrückschlagventil 58, 60, 62, 64 ist derart angeordnet, dass ein aus einer der Hydraulikkammern 44, 46, 48, 50 heraustretender Hydraulikfluss durch die Drossel gedrosselt wird, hingegen ein in eine der Hydraulikkammern 44, 46, 48, 50 eintretender Hydraulikfluss über das entsprechende Rückschlagventil des Drosselrückschlagventils 58, 60, 62, 64 ungehindert erfolgen kann. Durch die in den Drosselrückschlagventilen 58, 60, 62, 64 enthaltenen Drosseln wird eine Dämpfung für die Pendelbewegung bzw. Schwenkbewegung des Mittelrahmens 18 gegenüber dem Träger 16 erzielt. Die mechanisch-hydraulischen Zusammenhänge der in der Figur 4 dargestellten hydraulischen Anordnung seien anhand einer Pendelbewegung, die ein Einfahren des linken Hydraulikzylinders 34 aus Figur 4 bewirkt, im Folgenden erklärt: Bei der genannten Pendel- bzw. Schwenkbewegung des Mittelrahmens 18 werden aufgrund der synchronen mechanischen Kopplung der Hydraulikzylinder 34, 36 mit dem Mittelrahmen 18 bzw. dem Träger 16 der Hydraulikzylinder 34 derart betätigt, dass der eine Hydraulikzylinder 34 eingefahren und entsprechend der andere Hydraulikzylinder 36 ausgefahren wird. Damit ist verbunden, dass Hydraulikflüssigkeit aus der zweiten Hydraulikkammer 48 des einen Hydraulikzylinders 34 heraus fließt und der Hydraulikfluss durch das Drosselrückschlagventil 62 gedrosselt wird. Dadurch wiederum wird der Schwenkbewegung des Mittelrahmens 18 eine Dämpfungskraft entgegengesetzt, die umso größer ist, je schneller die Schwenkbewegung ist und je kleiner der Querschnitt der Drossel bzw. des Drosselventils ist. Der Querschnitt der Drossel wird hierbei vor Inbetriebnahme des Spritzengestänges 10, vorzugsweise für jedes Drosselrückschlagventil 58, 60, 62, 64 gleich, voreingestellt und gilt im Normalfall als konstant. Aufgrund der synchronen mechanischen Kopplung der Hydraulikzylinder 34, 36 wird der andere Hydraulikzylinder 36 ausgefahren, wodurch Hydraulikflüssigkeit aus der ersten Hydraulikkammer 46 des anderen Hydraulikzylinders 36 heraus fließt und der Hydraulikfluss durch das Drosselrückschlagventil 60 gedrosselt wird. Dadurch wird auch hier der Schwenkbewegung des Mittelrahmens 18 eine Dämpfungskraft entgegengesetzt, die umso größer ist, je schneller die Schwenkbewegung ist und je kleiner der Querschnitt der Drossel bzw. des Drosselventils ist. Die aus den Hydraulikkammern 48, 46 heraus fließende Hydraulikflüssigkeit fließt bewegungsbedingt in die sich vergrößernden Hydraulikkammern 44, 50 bzw. fließt zunächst in das Hydraulikreservoir 56 und wird von dort aus in die Hydraulikkammern 44, 50 angesaugt, wobei hier keine Drosselung des Hydraulikflusses erfolgt. Die Rückstellung des Mittelrahmens 18 gegenüber dem Träger 16 erfolgt vorzugsweise durch die elastischen Anschläge 42, wobei für kleinere Schwenkbewegungen, in denen die Elastizität der Anschläge nicht ausgenutzt wird auch Rückstellfedern eingesetzt werden können (hier nicht gezeigt). Als Resultat wird somit erzielt, dass eine Pendelbewegung bzw. eine Schwenkbewegung des Mittelrahmens 18 um die vertikal ausgerichtete Pendelachse 32 durch die Drosselrückschlagventile 62, 60 gedämpft wird. Entsprechendes erfolgt bei einer Pendel- bzw. Schwenkbewegung in die entgegen gesetzte Richtung, wobei hier der eine Hydraulikzylinder 34 eingefahren und der andere Hydraulikzylinder 36 ausgefahren wird. Entsprechend erfolgt dann ein Hydraulikfluss aus der ersten Hydraulikkammer 44 des einen Hydraulikzylinders 34 und der zweiten Hydraulikkammer 50 des anderen Hydraulikzylinders 36 heraus in die zweite Hydraulikkammer 48 des einen Hydraulikzylinders 34 und die erste Hydraulikkammer 46 des anderen Hydraulikzylinders 36 hinein, wobei dann die Drosseln bzw. Drosselventile der Drosselrückschlagventile 58, 64 eine Dämpfungsfunktion hervor rufen.

Eine alternative bzw. erweiterte Form einer erfindungsgemäßen Ausführungsform zeigt Figur 5. Zusätzlich zu der Ausführungsform in Figur 4 wurde die dort dargestellte hydraulische Anordnung um ein Schaltventil 66 und ein Hydraulikspeicher 68 erweitert, wobei das Schaltventil 66 wahlweise die Hydraulikleitungen 52, 54 mit dem Hydraulikreservoir 56 und/oder mit dem Hydraulikspeicher 68 verbindet. Das Schaltventil 66 ist als 4/3-Wege-Ventil ausgebildet. In einer Mittelstellung 70 des Schaltventils 66 sind die Hydraulikleitungen 52, 54 in einer sogenannten Schwimmstellung beide mit dem Hydraulikreservoir 56 verbunden. Zwei weitere Schaltstellungen 72, 74 des Schaltventils 66 verbinden die Hydraulikleitungen 52, 54 mit dem Hydraulikreservoir 56 oder dem Hydraulikspeicher 68, wobei in der Schaltstellung 72 die Hydraulikleitung 52 mit dem Hydraulikreservoir 56 und die Hydraulikleitung 54 mit dem Hydraulikspeicher 68 und in der Schaltstellung 74 die Hydraulikleitung 54 mit dem Hydraulikreservoir 56 und die Hydraulikleitung 52 mit dem Hydraulikspeicher 68 verbunden werden. Das Schaltventil 66 wird vorzugsweise über Magnetspulen 76 elektromagnetisch betätigt, wobei von einem am Mittelrahmen 18 positionierten Sensor 78 in Verbindung mit einer elektronischen Steuerung 80 ein entsprechendes Steuersignal generierbar ist. Ferner ist das Schaltventil 66 mit Rückstellfedern 82 versehen, die das Schaltventil 66 bei nicht vorhandenem Steuersignal für die Magnetspulen 76 in der Mittelstellung 70 halten bzw. zurückstellen. Der Sensor 78 ist derart ausgebildet und angeordnet, dass ein Verschwenken des Mittelrahmens 18 gegenüber den Träger 16 über einen voreinstellbaren Grenzschwenkwinkel oder Grenzpendelwinkel hinaus ein Sensorsignal auslöst, wobei ein Grenzschwenkwinkel bzw. Grenzpendelwinkel um die vertikale Pendelachse 32 in beide Schwenkrichtungen definiert ist. Der Sensor 78 erzeugt ein erstes Sensorsignal bei Erreichen oder Überschreiten des Grenzschwenkwinkels in eine erste Schwenkrichtung und ein zweites Sensorsignal bei Erreichen oder Überschreiten des Grenzschwenkwinkels in die entgegen gesetzte Schwenkrichtung, wobei die beiden Sensorsignale voneinander verschiedene Steuersignale für die Ansteuerung des Steuerventils 66 durch die elektronische Steuerung 80 auslösen, d. h. mit den unterschiedlichen Sensorsignalen ist jeweils eine Aktivierung einer der Magnetspulen 76 verbunden, so dass das Steuersignal bei dem einen Sensorsignal in die Schaltstellung 72 und bei dem anderen Steuersignal in die Schaftstellung 74 geschaltet wird. Die Anordnung des Sensors 78 ist in der Figur 1 dargestellt, wobei der Sensor einen am Träger 16 befestigten Metallsteg 82 umfasst, der sich relativ zu zwei über einen Spulenhalter 84 am Mittelrahmen 18 montierten Magnetspulen 86, 88 bewegt, sobald der Mittelrahmen 18 verschwenkt wird. Sobald der Mittelrahmen 18 Pendelbewegungen ausführt, die den durch entsprechende Positionierung der Magnetspulen 86, 88 voreingestellten Grenzschwenkwinkel erreichen, beispielsweise +/- 2° Schwenkwinkel abweichend von einer zum Träger 16 parallelen Grundstellung des Mittelrahmens 18, passiert der Metallsteg 82 eine der Magnetspulen 86, 88, wodurch ein entsprechendes Steuersignal für das Schaltventil 66 generiert wird. Durch die entsprechende Ansteuerung des Steuerventils 66 wird der Hydraulikspeicher 68 mit den Hydraulikzylindern 34, 36 verbunden, wodurch der Hydraulikdruck jeweils in einer der über die Hydraulikleitungen 52, 54 verbundenen Hydraulikkammern 44, 46, 48, 50 der Hydraulikzylinders 34, 36 erhöht werden kann. Mit einer Erhöhung des Hydraulikdrucks durch den Hydraulikspeicher 68 kann eine zusätzliche Rückstellkraft für den Mittelrahmen 18 erzeugt werden, sollte der Mittelrahmen 18 den voreingestellten Grenzschwenkwinkel bzw. Grenzpendelwinkel überschritten bzw. erreicht haben. Eine entsprechende hydraulische Grundaufladung des Hydraulikspeichers 68 erfolgt über eine Hydraulikpumpe 90, die über ein Rückschlagventil 92 mit dem Hydraulikspeicher 68 verbunden ist und über eine Hydraulikleitung 94 Hydraulikflüssigkeit aus dem Hydraulikreservoir 56 bezieht. Bei Überschreiten bzw. Erreichen des voreingestellten Grenzschwenkwinkels bzw. Grenzpendelwinkels wird durch eine zielgerechte Hinzuschaltung des Hydraulikspeichers 68 während einer Schwenkbewegung bzw. Pendelbewegung des Mittelrahmens 18 eine zusätzliche Druckaufladung des Hydraulikspeichers 68 erzielt, wodurch neben der durch die Drosselrückschlagventile 58, 60, 62, 64 erzeugten Dämpfung eine zusätzliche Dämpfung der Schwenkbewegung bzw. der Pendelbewegung eintritt. Die durch die zusätzliche Druckaufladung im Hydraulikspeicher 68 gespeicherte Energie wird dann durch entsprechend zielgerechte Hinzuschaltung des Hydraulikspeichers 68 wieder abgegeben, wodurch letztendlich die zusätzliche Rückstellkraft für den Mittelrahmen 18 erzeugt wird. Um die Druckverhältnisse in der hydraulischen Anordnung des in Figur 5 dargestellten Ausführungsbeispiels zielgerecht steuern zu können, sind ferner ein einstellbares Druckregelventil 96 sowie ein erstes und zweites einstellbares Druckbegrenzungsventil 98, 100 oder Folgeventil angeordnet. Das Druckregelventil 96 ist zwischen dem Hydraulikspeicher 68 und dem Schaltventil 66 angeordnet, wobei das Druckregelventil 96 bei Überschreiten eines einstellbaren Grenzdrucks schließt bzw. einen Hydraulikfluss vom Hydraulikspeicher 68 in Richtung der Hydraulikzylinder 34, 36 derart regelt, dass der eingestellte Grenzdruck nicht überschritten wird. Der am Druckregelventil 96 eingestellte Grenzdruck entspricht somit einem voreinstellbaren Rückstelldruck, unter dem die oben beschriebene zusätzliche Rückstellkraft erzeugt werden kann. Das erste einstellbare Druckbegrenzungsventil 98 ist parallel zum Druckregelventil 96 zwischen dem Schaltventil 66 und dem Hydraulikspeicher 68 angeordnet. Das erste Druckbegrenzungsventil 98 ermöglicht einen Hydraulikfluss zwischen Schaltventil 66 und Hydraulikspeicher 68, sobald ein einstellbarer Grenzdruck erreicht wird, bzw. unterbricht diesen, sobald der eingestellte Grenzdruck unterschritten wird. Der am ersten Druckbegrenzungsventil 98 eingestellte Grenzdruck entspricht somit einem voreinstellbaren Dämpfungsdruck, mit dem die oben beschriebene zusätzliche Dämpfung der Schwenkbewegung bzw. der Pendelbewegung erzielt werden kann. Das zweite Druckbegrenzungsventil 100 ist zwischen dem Hydraulikspeicher 68 und dem Hydraulikreservoir 56 angeordnet. Das zweite Druckbegrenzungsventil 100 ermöglicht einen Hydraulikfluss zwischen Hydraulikspeicher 68 und Hydraulikreservoir 56 bzw. zwischen dem ersten Druckbegrenzungsventil 98 und dem Hydraulikspeicher 56, sobald ein einstellbarer Grenzdruck erreicht wird, bzw. unterbricht diesen, sobald der eingestellte Grenzdruck unterschritten wird. Der am zweiten Druckbegrenzungsventil 100 eingestellte Grenzdruck entspricht somit einem voreinstellbaren maximalen Betriebsdruck, mit dem die in Figur 5 dargestellte hydraulische Anordnung betrieben werden kann.

Die mechanisch-hydraulischen Zusammenhänge der in Figur 5 dargestellten hydraulischen Anordnung seien anhand einer Pendelbewegung, die ein Einfahren des linken Hydraulikzylinders 34 aus Figur 5 bewirkt, im Folgenden erklärt, wobei die Erklärungen zu dem in Figur 4 dargestellten Ausführungsbeispiel auch hier anzuwenden sind und im Wesentlichen nur auf die Wirkungen und mechanisch-hydraulischen Zusammenhänge der in Figur 5 dargestellten zusätzlichen Komponenten eingegangen werden soll. Das in Figur 5 dargestellte erweiterte Ausführungsbeispiel berücksichtigt eine Dämpfung und eine Rückstellkraft bei Pendelbewegungen des Mittelrahmens 18 gegenüber dem Träger 16 die über die im Ausführungsbeispiel zu Figur 4 dargestellte Dämpfung und Rückstellkraft hinausgeht bzw. diese variabel gestaltet. Zu Grunde gelegt wird hierbei das Überschreiten eines voreinstellbaren Grenzschwenkwinkels bzw. Grenzpendelwinkels, der durch entsprechende Anordnung der Magnetspulen 86, 88 und des Metallstegs 82 auf beispielsweise +/- 2° eingestellt ist. Bei einer Schwenkbewegung des Mittelrahmens 18 unterhalb des Grenzschwenkwinkels von beispielsweise +/- 2° befindet sich das Schaltventil 66 in seiner Mittelstellung 70, in der beide Hydraulikleitungen 52, 54 in der Schwimmstellung miteinander und mit dem Hydraulikreservoir 56 verbunden sind. Für diesen Betriebszustand gelten die gleichen Wirkungen und mechanisch-hydraulischen Zusammenhänge wie bereits oben zu dem in Figur 4 dargestellten Ausführungsbeispiel beschrieben wurde. Bei Erreichen des Grenzschwenkwinkels bzw. Grenzpendelwinkels oder bei einer Schwenkbewegung des Mittelrahmens 18 über den Grenzschwenkwinkel hinaus, bei der beispielsweise ein Einfahren des linken Hydraulikzylinders 34 aus Figur 5 erfolgt, wird durch den Sensor 78 bzw. durch die Magnetspule 86 ein Sensorsignal erzeugt, welches eine Generierung eines Schaltsignals zum Schalten des Schaltventils 66 in die Schaltstellung 72 durch die elektronische Steuereinheit 80 bewirkt. Das Schaltventil 66 verbindet die Hydraulikleitung 54 mit dem ersten Druckbegrenzungsventil 98. Durch die Schwenkbewegung des Mittelrahmens 18 erhöht sich der Hydraulikdruck in der Hydraulikleitung 54, bis der eingestellte Dämpfungsdruck erreicht wird und das Druckbegrenzungsventil 98 öffnet. Die aus den Hydraulikkammern 46, 48 herausströmende Hydraulikflüssigkeit wird durch den zunehmenden Hydraulikdruck gebremst, wodurch eine zusätzliche Drosselung des Hydraulikflusses aus den Hydraulikkammern 46, 48 heraus erzielt wird. Sobald das Druckbegrenzungsventil 98 öffnet erfolgt ein Hydraulikfluss in den Hydraulikspeicher 68 hinein, der zu einer Druckaufladung des Hydraulikspeichers 68 führt. Gleichzeitig zu dem Ausströmen der Hydraulikflüssigkeit aus den Hydraulikkammern 46, 48 heraus erfolgt ein Ansaugen von Hydraulikflüssigkeit in die Hydraulikkammern 44, 50 hinein über die mit dem Hydraulikreservoir verbundene Hydraulikleitung 52. Da die Hydraulikkammern 44, 46 im Wesentlichen drucklos sind und die auf den Mittelrahmen 18 einwirkenden Kräfte abnehmen bzw. die Bewegungsenergie am Mittelrahmen 18 abnimmt, beginnt ab einem bestimmten Zustandspunkt sich der Mittelrahmen 18 wieder in die entgegen gesetzte Richtung zu bewegen und der Hydraulikdruck in der Hydraulikleitung 54 zu sinken, bis zunächst der Dämpfungsdruck unterschritten wird und das Druckbegrenzungsventil 98 schließt. Es folgt eine weitere Druckabnahme, bis der am Druckregelventil 96 eingestellte Rückstelldruck erreicht wird. Sobald das Druckregelventil 96 öffnet, wird die in dem Hydraulikspeicher 68 gespeicherte Energie in Form von Überdruck frei gesetzt und in Bewegungsenergie umgesetzt, wodurch sich eine Rückstellkraft aufbaut und die in die Hydraulikkammern 46, 48 zurückfließende Hydraulikflüssigkeit unter erhöhtem Druck, also beschleunigt, zurückfließt. Dadurch wird eine möglichst schnelle Rückführung in eine Schwenkstellung zurück in den Bereich zwischen +/- 2° Schwenk- bzw. Pendelwinkel erzielt. Sobald der Schwenkwinkel bzw. Pendelwinkel unterhalb des Grenzschwenkwinkels bzw. Grenzpendelwinkels liegt, erfolgt ein entsprechendes durch den Sensor 78 bzw. durch die Magnetspule 86 hervorgerufenes Signal, welches von der elektronischen Steuerung als solches erkannt wird und in ein entsprechendes Schaltsignal für das Schaltventil 66 umgesetzt wird, woraufhin das Schaltventil wieder in die Mittelstellung 70 geschaltet wird und die oben bereits zu Figur 4 beschriebenen mechanisch-hydraulischen Zusammenhänge wieder vorherrschen.

Eine entsprechende Wirkungsfolge mit analogen mechanisch-hydraulischen Zusammenhängen wie bis hierhin beschrieben tritt ein, wenn der Mittelrahmen 18 in die andere Richtung verschwenkt wird und der Grenzschwenkwinkel bzw. Grenzpendelwinkel erreicht oder überschritten wird, wobei dann der Hydraulikzylinder 36 eingefahren und der Hydraulikzylinder 34 ausgefahren wird. Bei diesen Bewegungsabläufen wird ein zur Schaltung des Schaltventils 66 durch den Sensor 78 bzw. durch die Magnetspule 88 ausgelöst, woraufhin von der elektronischen Steuerung ein entsprechendes Steuersignal zum Schalten des Schaltventils 66 in die Schaltstellung 74 generiert wird. Dementsprechend wird dann die Hydraulikleitung 54 mit dem Hydraulikspeicher 68 bzw. mit dem Druckbegrenzungsventil 98 bzw. mit dem Druckregelventil 96 und die Hydraulikleitung 52 mit dem Hydraulikreservoir 56 verbunden. Die daraufhin folgenden Wirkungen bezüglich der zusätzlichen Dämpfung und Rückstellkraft treten auf entsprechend analoger Weise wie oben beschrieben ein, bis der Mittelrahmen 18 wieder eine Position oder Stellung innerhalb des vorgegebenen Grenzschwenkwinkels bzw. Grenzpendelwinkels eingenommen hat.

Sollte bei Erreichen oder Überschreiten des Grenzschwenk- bzw. Grenzpendelwinkels aufgrund zu hoher Kräfte, die auf den Mittelrahmen 18 einwirken, der am Druckbegrenzungsventil 100 eingestellte Betriebsgrenzdruck erreicht werden, dann öffnet dieses, so dass Hydraulikflüssigkeit in das Hydraulikreservoir 56 abfließen kann, bis der Betriebsdruck wieder unterhalb des Betriebsgrenzdrucks abgesunken ist. Das Druckbegrenzungsventil 100 stellt somit ein reines Sicherheitsventil dar.

Der in dem oben beschriebenen Ausführungsbeispiel zu Figur 5 angeführte Grenzschwenkwinkel bzw. Grenzpendelwinkel von +/- 2° ist nur beispielhaft mit diesem Wert gewählt. Es können auch größere oder kleiner Grenzschwenkwinkel bzw. Grenzpendelwinkel eingestellt werden, wobei sich an den Wirkungen und mechanisch-hydraulischen Zusammenhängen der hydraulischen Anordnung aus Figur 5 prinzipiell nichts ändert.

Auch wenn die Erfindung lediglich anhand von zwei Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise an Stelle des Rückschlagventils 92 ein Druckbegrenzungsventil vorgesehen sein, das den Hydraulikfluss von der Hydraulikpumpe 90 in den Hydraulikspeicher 68 steuert. Ebenfalls ist es denkbar ohne Hydraulikpumpe 90 auszukommen, wobei die hydraulische Anordnung bei regelmäßig durchzuführenden Wartungen hinsichtlich möglicher Leckagen untersucht werden sollte und gegebenenfalls Hydraulikflüssigkeit nachgefüllt werden sollte. Weiterhin kann es von Vorteil sein, zwischen dem Druckregelventil 96 und dem Schaltventil 66 bzw. dem Druckbegrenzungsventil 98 ein in Richtung des Hydraulikspeichers 68 schließendes Rückschlagventil vorzusehen.

## Patentansprüche

1. Spritzengestänge (10) für eine Feldspritze, mit einem Träger (16) und einem am Träger (16) schwenkbar befestigten Mittelrahmen (18), wobei der Mittelrahmen (18) gegenüber dem Träger (16) um eine im wesentlichen vertikal ausgerichtete Pendelachse (32) aus einer Neutralstellung heraus beidseitig verschwenkbar ist und wenigstens ein erster Hydraulikzylinder (34, 36) angeordnet ist, der einenends gelenkig am Träger (16) und anderenends gelenkig am Mittelrahmen (18) befestigt ist, derart, dass beim Verschwenken des Mittelrahmens (18) gegenüber dem Träger (16) aus der Neutralstellung heraus der wenigstens erste Hydraulikzylinder (34, 36) ausgefahren oder eingefahren wird, **dadurch gekennzeichnet, dass** der wenigstens erste Hydraulikzylinder (34, 36) über eine erste und eine zweite Hydraulikkammer (44, 46, 48, 50) verfügt, eine erste Hydraulikleitung (52, 54) vorgesehen ist, die in die erste Hydraulikkammer (44, 46) des wenigstens ersten Hydraulikzylinders (34, 36) mündet, und eine zweite Hydraulikleitung (54, 52) vorgesehen ist, die in die zweite Hydraulikkammer (48, 50) des wenigstens ersten Hydraulikzylinders (34, 36) mündet, wobei Mittel (58, 60, 62, 64) vorgesehen sind, durch die ein Hydraulikfluss aus einer Hydraulikkammer (44, 46, 48, 50) heraus gedrosselt und ein Hydraulikfluss in eine Hydraulikkammer (44, 46, 48, 50) hinein im Wesentlichen ungedrosselt erfolgt und wobei die Hydraulikleitungen (52, 54) derart angeordnet sind, dass bei dem wenigsten ersten Hydraulikzylinder (34, 36) ein Hydraulikfluss einer Hydraulikkammer (44, 46, 48, 50) heraus mit einem Hydraulikfluss in eine Hydraulikkammer (44, 46, 48, 50) hinein verbunden ist.

2. Spritzengestänge (10) nach Anspruch 1, **dadurch gekennzeichnet, dass** wenigstens ein zweiter Hydraulikzylinder (36, 34) angeordnet ist, wobei der erste und zweite Hydraulikzylinder (34, 36) beidseitig der vertikal ausgerichteten Pendelachse (32) angeordnet sind, so dass beim Verschwenken des Mittelrahmens (18) gegenüber dem Träger (16) aus der Neutralstellung heraus der erste Hydraulikzylinder (34, 36) ausgefahren oder eingefahren und der zweite Hydraulikzylinder (36, 34) eingefahren bzw. ausgefahren wird, wobei die erste Hydraulikleitung (52, 54) die erste Hydraulikkammer (44, 46) des ersten Hydraulikzylinders (34, 36) mit der zweiten Hydraulikkammer (50, 48) des zweiten Hydraulikzylinders (36, 34) verbindet, und die zweite Hydraulikleitung (54, 52), die zweite Hydraulikkammer (48, 50) des ersten Hydraulikzylinders (34, 36) mit der ersten Hydraulikkammer (46, 44) des zweiten Hydraulikzylinders (36, 34) verbindet.

3. Spritzengestänge (10) nach Anspruch 1 oder 2, **dadurch gekennzeichnet, dass** die Mittel (58, 60, 62, 64) ein in Richtung der Hydraulikkammer (44, 46, 48, 50) öffnendes Drosselrückschlagventil umfassen.

4. Spritzengestänge (10) nach einem der vorhergehenden Ansprüche, **dadurch gekennzeichnet, dass** ein Hydraulikreservoir (56) vorgesehen ist und beide Hydraulikleitungen (52, 54) mit dem Hydraulikreservoir verbindbar sind.

5. Spritzengestänge (10) nach Anspruch 4, **dadurch gekennzeichnet, dass** ein Schaltventil (66) vorgesehen ist, welches die erste und/oder zweite Hydraulikleitung (52, 54) mit dem Hydraulikreservoir (56) verbindet, wobei das Schaltventil (66) vorzugsweise als 4/3 Wegeventil mit Schwimm-Mittelstellung (70) ausgebildet ist und wobei das Schaltventil (66) vorzugsweise in Abhängigkeit von einer Schwenkstellung des Mittelrahmens (18) gegenüber dem Träger (16) schaltbar ist.

6. Spritzengestänge (10) nach Anspruch 5, **dadurch gekennzeichnet, dass** ein Hydraulikspeicher (68) vorgesehen ist, der über das Schaltventil (66) mit der ersten oder der zweiten Hydraulikleitung (52, 54) verbindbar ist.

7. Spritzengestänge (10) nach einem der vorhergehenden Ansprüche, **dadurch gekennzeichnet, dass** ein Sensor (78) vorgesehen ist, der wenigstens eine Schwenkstellung des Mittelrahmens (18) relativ zum Träger (16) signalisiert.

8. Spritzengestänge (10) nach einem der Ansprüche 5 bis 7, **dadurch gekennzeichnet, dass** ein Druckregelventil (96) vorgesehen ist, welches zwischen dem Hydraulikspeicher (68) und dem Schaltventil (66) angeordnet ist.

9. Spritzengestänge (10) nach Anspruch 8, **dadurch gekennzeichnet, dass** ein erstes Druckbegrenzungsventil (98) oder Folgeventil vorgesehen ist, welches zwischen dem Hydraulikspeicher (68) und dem Schaltventil (66) angeordnet ist, wobei das Druckbegrenzungsventil (98) bzw. Folgeventil parallel zu dem Druckregelventil (96) angeordnet ist.

10. Spritzengestänge (10) nach einem der Ansprüche 6 bis 9, **dadurch gekennzeichnet, dass** ein zweites Druckbegrenzungsventil (100) oder Folgeventil vorgesehen ist, welches zwischen dem Hydraulikspeicher (68) und dem Hydraulikreservoir (56) angeordnet ist.

11. Spritzengestänge (10) nach einem der vorhergehenden Ansprüche, **dadurch gekennzeichnet, dass** beidseitig der vertikal ausgerichteten Pendelachse (32) jeweils ein elastischer Anschlag (42) angeordnet ist, vorzugsweise in Form eines elastomeren Körpers oder Puffers.

12. Spritzengestänge (10) nach einem der vorhergehenden Ansprüche, **dadurch gekennzeichnet, dass** ein Pendelrahmen (14) vorgesehen ist, an dem der Träger (16) befestigt ist, wobei der Träger (16) um eine erste horizontal ausgerichtete Pendelachse (30) verschwenkbar an dem Pendelrahmen (14) aufgehängt ist.

13. Spritzengestänge (10) nach Anspruch 12, **dadurch gekennzeichnet, dass** ein Anbaurahmen (12) vorgesehen ist, an dem der Pendelrahmen (14) befestigt ist, wobei der Pendelrahmen (14) um eine zweite horizontal ausgerichtete Pendelachse (22) verschwenkbar an dem Anbaurahmen (12) aufgehängt ist.

14. Spritzengestänge (10) nach Anspruch 13, **dadurch gekennzeichnet, dass** der Anbaurahmen (12) mit einer Feldspritze verbindbar ist.

15. Spritzengestänge (10) nach Anspruch 13 oder 14, **dadurch gekennzeichnet, dass** der Anbaurahmen (12) höhenverstellbar mit einer Feldspritze verbindbar ist, vorzugsweise über ein Parallelogrammgestänge.

## Claims

1. Spray linkage (10) for a crop sprayer, comprising a support (16) and a central frame (18) fastened pivotably to the support (16), the central frame (18) being pivotable on both sides relative to the support (16) from a neutral position about a substantially vertically aligned oscillating axis (32), and at least one first hydraulic cylinder (34, 36) is arranged which at one end is fastened in an articulated manner to the support (16) and at the other end in an articulated manner to the central frame (18), such that when pivoting the central frame (18) relative to the support (16) from the neutral position the at least first hydraulic cylinder (34, 36) is extended or retracted, **characterized in that** the at least first hydraulic cylinder (34, 36) has a first and a second hydraulic chamber (44, 46, 48, 50), a first hydraulic line (52, 54) is provided which discharges into the first hydraulic chamber (44, 46) of the at least first hydraulic cylinder (34, 36), and a second hydraulic line (54, 52) is provided which discharges into the second hydraulic chamber (48, 50) of the at least first hydraulic cylinder (34, 36), means (58, 60, 62, 64) being provided via which a hydraulic flow from a hydraulic chamber (44, 46, 48, 50) is throttled and a hydraulic flow into a hydraulic chamber (44, 46, 48, 50) takes place in a substantially unthrottled manner, and the hydraulic lines (52, 54) being arranged such that in the at least first hydraulic cylinder (34, 36) a hydraulic flow out of a hydraulic chamber (44, 46, 48, 50) is linked to a hydraulic flow into a hydraulic chamber (44, 46, 48, 50).

2. Spray linkage (10) according to Claim 1, **characterized in that** at least one second hydraulic cylinder (36, 34) is arranged, the first and second hydraulic cylinders (34, 36) being arranged on both sides of the vertically aligned oscillating axis (32), so that when pivoting the central frame (18) relative to the support (16) from the neutral position the first hydraulic cylinder (34, 36) is extended or retracted and the second hydraulic cylinder (36, 34) is retracted and/or extended, the first hydraulic line (52, 54) connecting the first hydraulic chamber (44, 46) of the first hydraulic cylinder (34, 36) to the second hydraulic chamber (50, 48) of the second hydraulic cylinder (36, 34), and the second hydraulic line (54, 52) connecting the second hydraulic chamber (48, 50) of the first hydraulic cylinder (34, 36) to the first hydraulic chamber (46, 44) of the second hydraulic cylinder (36, 34).

3. Spray linkage (10) according to Claim 1 or 2, **characterized in that** the means (58, 60, 62, 64) comprise a one-way restrictor opening in the direction of the hydraulic chamber (44, 46, 48, 50).

4. Spray linkage (10) according to one of the preceding claims, **characterized in that** a hydraulic tank (56) is provided and both hydraulic lines (52, 54) may be connected to the hydraulic tank.

5. Spray linkage (10) according to Claim 4, **characterized in that** an on-off valve (66) is provided which connects the first and/or the second hydraulic line (52, 54) to the hydraulic tank (56), the on-off valve (66) preferably being configured as a 4/3-way valve with a floating central position (70) and the on-off valve (66) preferably being actuatable depending on a pivoted position of the central frame (18) relative to the support (16).

6. Spray linkage (10) according to Claim 5, **characterized in that** a hydraulic accumulator (68) is provided which may be connected via the on-off valve (66) to the first or to the second hydraulic line (52, 54).

7. Spray linkage (10) according to one of the preceding claims, **characterized in that** a sensor (78) is provided which signals at least one pivoted position of the central frame (18) relative to the support (16).

8. Spray linkage (10) according to one of Claims 5 to 7, **characterized in that** a pressure control valve (96) is provided which is arranged between the hydraulic accumulator (68) and the on-off valve (66).

9. Spray linkage (10) according to Claim 8, **characterized in that** a first pressure relief valve (98) or sequence valve is provided which is arranged between the hydraulic accumulator (68) and the on-off valve (66), the pressure relief valve (98) and/or sequence valve being arranged parallel to the pressure control valve (96).

10. Spray linkage (10) according to one of Claims 6 to 9, **characterized in that** a second pressure relief valve (100) or sequence valve is provided which is arranged between the hydraulic accumulator (68) and the hydraulic tank (56).

11. Spray linkage (10) according to one of the preceding claims, **characterized in that** on both sides of the vertically aligned oscillating axis (32) one respective resilient stop (42) is arranged, preferably in the form of an elastomeric body or buffer.

12. Spray linkage (10) according to one of the preceding claims, **characterized in that** an oscillating frame (14) is provided to which the support (16) is fastened, the support (16) being pivotably suspended on the oscillating frame (14) about a first horizontally aligned oscillating axis (30).

13. Spray linkage (10) according to Claim 12, **characterized in that** a mounting frame (12) is provided to which the oscillating frame (14) is fastened, the oscillating frame (14) being pivotably suspended on the mounting frame (12) about a second horizontally aligned oscillating axis (22).

14. Spray linkage (10) according to Claim 13, **characterized in that** the mounting frame (12) may be connected to a crop sprayer.

15. Spray linkage (10) according to Claim 13 or 14, **characterized in that** the mounting frame (12) may be connected in a height-adjustable manner to a crop sprayer, preferably via a parallelogram linkage system.

## Revendications

1. Rampe de pulvérisation (10) pour un pulvérisateur pour cultures basses, avec un support (16) et un cadre central (18) fixé de façon pivotante au support (16), dans laquelle le cadre central (18) peut pivoter de part et d'autre par rapport au support (16) à partir d'une position neutre autour d'un axe d'oscillation (32) orienté essentiellement en direction verticale et il se trouve au moins un premier vérin hydraulique (34, 36) qui est articulé par une extrémité sur le support (16) et par l'autre extrémité sur le cadre central (18), de telle manière que, lors du pivotement du cadre central (18) par rapport au support (16) à partir de la position neutre, ledit au moins un premier vérin hydraulique (34, 36) soit sorti ou rentré, **caractérisée en ce que** ledit au moins un premier vérin hydraulique (34, 36) comporte une première et une deuxième chambre hydraulique (44, 46, 48, 50), il est prévu une première conduite hydraulique (52, 54) qui débouche dans la première chambre hydraulique (44, 46) dudit au moins un premier vérin hydraulique (34, 36), et il est prévu une deuxième conduite hydraulique (54, 52) qui débouche dans la deuxième chambre hydraulique (48, 50) dudit au moins un premier vérin hydraulique (34, 36), dans laquelle il est prévu des moyens (58, 60, 62, 64) par lesquels un flux hydraulique sort d'une chambre hydraulique (44, 46, 48, 50) de façon étranglée et un flux hydraulique pénètre dans une chambre hydraulique (44, 46, 48, 50) de façon essentiellement non étranglée et dans laquelle les conduites hydrauliques (52, 54) sont disposées de telle manière que, dans ledit au moins un premier vérin hydraulique (34, 36), un flux hydraulique sortant d'une chambre hydraulique (44, 46, 48, 50) soit raccordé à un flux hydraulique pénétrant dans une chambre hydraulique (44, 46, 48, 50).

2. Rampe de pulvérisation (10) selon la revendication 1, **caractérisée en ce qu'**il se trouve au moins un deuxième vérin hydraulique (36, 34), dans laquelle le premier et le deuxième vérin hydraulique (34, 36) sont disposés de part et d'autre de l'axe d'oscillation orienté verticalement (32), de telle manière que, lors du pivotement du cadre central (18) par rapport au support (16) à partir de la position neutre, le premier vérin hydraulique (34, 36) soit sorti ou rentré et que le deuxième vérin hydraulique (36, 34) soit rentré ou sorti, dans laquelle la première conduite hydraulique (52, 54) relie la première chambre hydraulique (44, 46) du premier vérin hydraulique (34, 36) à la deuxième chambre hydraulique (50, 48) du deuxième vérin hydraulique (36, 34), et la deuxième conduite hydraulique (54, 52) relie la deuxième chambre hydraulique (48, 50) du premier vérin hydraulique (34, 36) à la première chambre hydraulique (46, 44) du deuxième vérin hydraulique (36, 34).

3. Rampe de pulvérisation (10) selon la revendication 1 ou 2, **caractérisée en ce que** les moyens (58, 60, 62, 64) comprennent un clapet anti-retour d'étranglement s'ouvrant en direction de la chambre hydraulique (44, 46, 48, 50).

4. Rampe de pulvérisation (10) selon l'une quelconque des revendications précédentes, **caractérisée en ce qu'**il est prévu un réservoir hydraulique (56) et les deux conduites hydrauliques (52, 54) peuvent être raccordées au réservoir hydraulique.

5. Rampe de pulvérisation (10) selon la revendication 4, **caractérisée en ce qu'**il est prévu une soupape de commande (66), qui relie la première et/ou la deuxième conduite hydraulique (52, 54) au réservoir hydraulique (56), dans laquelle la soupape de commande (66) est de préférence une soupape à 4/3 voies avec une position médiane flottante (70) et dans laquelle la soupape de commande (66) peut être commutée de préférence en fonction d'une position de pivotement du cadre central (18) par rapport au support (16).

6. Rampe de pulvérisation (10) selon la revendication 5, **caractérisée en ce qu'**il est prévu un accumulateur hydraulique (68), qui peut être raccordé à la première ou à la deuxième conduite hydraulique (52, 54) par l'intermédiaire de la soupape de commande (66).

7. Rampe de pulvérisation (10) selon l'une quelconque des revendications précédentes, **caractérisée en ce qu'**il est prévu un capteur (78), qui signale au moins une position de pivotement du cadre central (18) par rapport au support (16).

8. Rampe de pulvérisation (10) selon l'une quelconque des revendications 5 à 7, **caractérisée en ce qu'**il est prévu une soupape de régulation de pression (96), qui est disposée entre l'accumulateur hydraulique (68) et la soupape de commande (66).

9. Rampe de pulvérisation (10) selon la revendication 8, **caractérisée en ce qu'**il est prévu une première soupape de limitation de pression (98) ou soupape de poursuite, qui est disposée entre l'accumulateur hydraulique (68) et la soupape de commande (66), dans laquelle la soupape de limitation de pression (98) ou la soupape de poursuite est disposée en parallèle avec la soupape de régulation de pression (96).

10. Rampe de pulvérisation (10) selon l'une quelconque des revendications 6 à 9, **caractérisée en ce qu'**il est prévu une deuxième soupape de limitation de pression (100) ou soupape de poursuite, qui est disposée entre l'accumulateur hydraulique (68) et le réservoir hydraulique (56).

11. Rampe de pulvérisation (10) selon l'une quelconque des revendications précédentes, **caractérisée en ce qu'**une butée élastique (42) est disposée respectivement de part et d'autre de l'axe d'oscillation orienté verticalement (32), de préférence sous la forme d'un corps ou d'un tampon élastomère.

12. Rampe de pulvérisation (10) selon l'une quelconque des revendications précédentes, **caractérisée en ce qu'**il est prévu un cadre oscillant (14), sur lequel le support (16) est fixé, dans laquelle le support (16) est suspendu sur le cadre oscillant (14) de façon pivotante autour d'un premier axe d'oscillation orienté horizontalement (30).

13. Rampe de pulvérisation (10) selon la revendication 12, **caractérisée en ce qu'**il est prévu un cadre de montage (12), sur lequel le cadre oscillant (14) est fixé, dans laquelle le cadre oscillant (14) est suspendu sur le cadre de montage (12) de façon pivotante autour d'un deuxième axe d'oscillation orienté horizontalement (22).

14. Rampe de pulvérisation (10) selon la revendication 13, **caractérisée en ce que** le cadre de montage (12) peut être assemblé à un pulvérisateur pour cultures basses.

15. Rampe de pulvérisation (10) selon la revendication 13 ou 14, **caractérisée en ce que** le cadre de montage (12) peut être assemblé de façon réglable en hauteur à un pulvérisateur pour cultures basses, de préférence au moyen d'un parallélogramme articulé.
